Europäisches Patentamt

European Patent Office

Office européen des brevets

(11) Publication number: **0 062 936**
**B1**

(12) **EUROPEAN PATENT SPECIFICATION**

(45) Date of publication of patent specification: **05.02.86**

(21) Application number: **82200316.6**

(22) Date of filing: **11.03.82**

(51) Int. Cl.⁴: **G 01 K 1/14,** G 01 K 1/16, G 01 K 7/00

(54) **Temperature sensor.**

(30) Priority: **26.03.81 NL 8101497**

(43) Date of publication of application:
**20.10.82 Bulletin 82/42**

(45) Publication of the grant of the patent:
**05.02.86 Bulletin 86/06**

(84) Designated Contracting States:
**DE FR GB IT**

(56) References cited:
**US-A-3 878 728**
**US-A-4 133 208**
**US-A-4 186 368**

**Encyclopedic Americana", 1981 edition, page 525**

(73) Proprietor: **N.V. Philips' Gloeilampenfabrieken Groenewoudseweg 1**
**NL-5621 BA Eindhoven (NL)**

(72) Inventor: **Fransen, Aleidus Gezines**
**c/o INT. OCTROOIBUREAU B.V. Prof. Holstlaan 6**
**NL-5656 AA Eindhoven (NL)**

(74) Representative: **Veenstra, Gustaaf et al**
**INTERNATIONAAL OCTROOIBUREAU B.V. Prof. Holstlaan 6**
**NL-5656 AA Eindhoven (NL)**

Courier Press, Leamington Spa, England.

## Description

The invention relates to a temperature sensor, comprising a tubular holder at the front end of which there is situated a contact face which forms part of a support which is connected to the holder and on which there is arranged a temperature-sensitive element to which connection wires are secured which extend through the interior of the holder.

Temperature sensors of this kind are used for measuring the surface temperatures of objects. To achieve this, the contact face is pressed against the relevant surface. The temperature sensitive element may be, for example, a platinum resistor whose resistance is measured by means of a suitable measuring instrument *via* the connection wires. Because this element is arranged on the support so that it is remote from the contact face, damage during measurement is prevented. If the support is made of an insulating material, it also prevents conductive contact between the temperature-sensitive element and voltage-carrying surfaces during a measurement of the temperature of such surfaces.

It a drawback of known temperature sensors of the kind set forth that a part of the heat flow from the surface to be examined is dissipated *via* the support and the holder, so that it does not reach the temperature-sensitive element. Consequently, a comparatively long period of time is required before the element reaches its ultimate temperature, and the measurement is also less accurate. This effect is even more significant when the temperature sensor is pressed against a surface to be examined having a slightly different attitude, so that only part of the contact face rests firmly against the object surface.

A temperature sensor corresponding to the preamble of claim 1 is known from US—A—4 133 208.

It is an object of the invention to provide a temperature sensor in which the contact face is automatically correctly arranged against the surface to be examined, and in which the heat flow from the contact surface to the holder is negligibly small. To achieve this, the temperature sensor has the features set out in claim 1.

Because the compound is flexible, the support can adapt itself to the attitude of the surface to be examined, and because the compound is thermally insulating, the heat flow from the support to the holder is substantially reduced. The flexible compound is preferably a silicone paste.

A further reduction un the heat flow *via* the holder can be achieved by using a thermally poorly conductive plastics material for the manufacture of the holder.

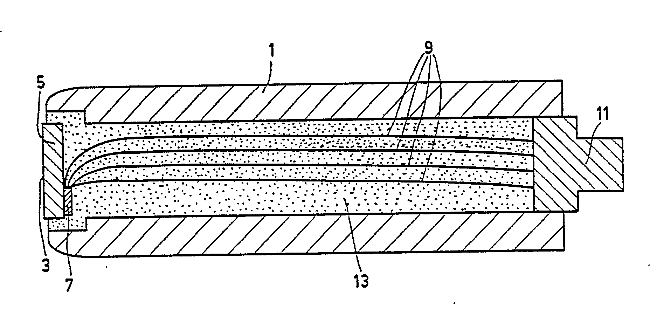

The invention will be described in detail hereinafter with reference to the drawing which represents a longitudinal sectional view of an embodiment.

A temperature sensor shown comprises a tubular holder 1 which is made of a thermally poorly conductive synthetic material, for example, polyphenylene sulphide filled with glass fibres. At the front end of the holder 1 (to the left in the Figure) there is situated a contact face 3 which forms part of a support 5 on which a temperature-sensitive element 7 is accommodated. The temperature-sensitive element 7 consists of, for example, a platinum resistor and is connected, *via* four connection wires 9, to a connector 11 arranged on the rear end of the holder 1. *Via* this connector, the temperature sensor can be connected to a suitable measuring instrument.

The support 5 should have a small thermal capacity and should be suitably thermally conductive in order to enable the temperature-sensitive element 7 to be heated rapidly. To achieve this, the support 5 is made of, for example, a plate of aluminium oxide dimensioned 2×2.3 mm with a thickness of 0.25 mm.

The interior of the holder 1 is filled with a thermally insulating, flexible compound 13, for example, a silicone paste. The support 5 is embedded in the compound so that the contact face 3 is not covered by the compound and preferably projects a small distance (for example 0.1 mm) from the exterior surface of the compound. Because the compound 13 is flexible, the support 5 is slightly movable with respect to the holder 1, so that the contact face is always suitably arranged against a surface to be examined, even when the longitudinal axis of the temperature sensor is not exactly perpendicular to this surface. A second function of the compound 13 is to retain the connection wires 9, so that the connections between these connection wires and the temperature-sensitive element 7 are strain-relieved.

As a result of the thermal insulating properties of the compound 13 and the holder 1, hardly any heat is transported between the support 5 and the environment *via* the holder. Consequently, and due to the high thermal conductivity of the support 5, the temperature-sensitive element 7 is quickly heated when the temperature sensor is pressed against a warm surface by way of the contact face 3 which is movable with respect to the holder. The connection wires 9 are chosen to be as thin as possible and, moreover, comparatively long, so that only very little heat is dissipated to the connector 11 *via* these wires.

Several variants of the described embodiment are possible. For example, the temperature-sensitive element 7 may be a thermistor or a thermo-couple. Moreover, the compound 13 may alternatively fill only the front part of the interior of the holder 1. Instead of being fed out *via* the connector 11, the connection wires 9 may be directly fed, for example, to a connection cable at the rear of the temperature sensor.

## Claims

1. A temperature sensor, comprising a tubular holder (1) at a front end of which there is arranged a temperature-sensitive element (7) to which connection wires (9) are secured which extend through the interior of the holder, at least that part of the interior of the holder which adjoins the front end being filled with a thermally insulating and flexible compound (13) that surrounds the temperature-sensitive element, characterized in that the temperature-sensitive element (7) is accommodated on an inner surface of a support (5) of high thermal conductivity which is embedded in said compound (13) at the front end of the holder (1) so that an outside contact face (3) of the support (5) is exposed and is free of the compound, said compound having sufficient flexibility to allow the support (5) to move relative to the holder (1) when the contact face is pressed against a surface of an object whose temperature is to be measured.

2. A temperature sensor as claimed in Claim 1, characterized in that the compound (13) is a silicone paste.

3. A temperature sensor as claimed in Claim 1 or 2, characterized in that the holder (1) is made of a thermally poorly conductive plastics.

**Revendications**

1. Capteur de température comportant un support tubulaire (1) à l'extrémité avant duquel est disposé un élément (7) sensible à la température auquel sont fixés des fils de connexion (9) s'étendant à travers l'intérieur du support, alors qu'au moins la partie de l'intérieur du support contiguë à l'extrémité avant est remplie d'une masse calorifuge et flexible (13) entourant l'élément sensible à la température, caractérisé en ce que l'élément (7) sensible à la température est disposé sur une surface intérieure d'un appui (5) à conductibilité thermique élevée qui est noyé dans ladite masse (13) à l'extrémité avant du support tubulaire (1) de façon qu'une plage de contact extérieure (3) de l'appui (5) soit laissée à découvert et soit exempte de la masse, ladite masse ayant une flexibilité suffisante pour permettre à l'appui (5) de se déplacer par rapport au support (1) lorsque la plage de contact est appuyée contre une surface d'un objet dont il faut mesurer la température.

2. Capteur de température selon la revendication 1, caractérisé en ce que la masse (13) est une pâte aux silicones.

3. Capteur de température selon la revendication 1 ou 2, caractérisé en ce que le support (1) est en matière plastique à mauvaise conductibilité thermique.

**Patentansprüche**

1. Temperaturaufnehmer mit einer rohrförmigen Halterung (1), an deren Vorderende sich ein temperaturempfindliches Element (7) befindet, an dem Anschlussdrähte (9) befestigt sind, die durch das Innere der Halterung verlaufen, wobei zumindest jener Teil der Inneren der Halterung, der sich nahe beim Frontende befindet, mit einer wärmeisolierenden und flexibelen Masse (13) gefüllt ist, in die das temperaturempfindliche Element einbebettet ist, dadurch gekennzeichnet, dass sich dass temperaturempfindliche Element (7) auf einer Innenfläche eines Trägers (5) mit hoher Wärmeleitfähigkeit befindet, der in die genannte Masse (13) am Vorderende der Halterung (1) derart einbebettet ist, dass eine äussere Kontaktfläche (3) des Trägers (5) unbedeckt und frei von der Masse ist, wobei die Masse ausreichende Flexibilität für eine relative Bewegung des Trägers (5) in bezug auf die Halterung (1) besitzt, wenn die Kontaktfläche an einer Oberfläche eines Objektes gedrückt wird, dessen Temperatur zu messen ist.

2. Temperaturaufnehmer nach Anspruch 1, dadurch gekennzeichnet, dass die Masse (13) eine Silikonpaste ist.

3. Temperaturaufnehmer nach Anspruch 1 oder 2, dadurch gekennzeichnet, dass die Halterung (1) aus einem thermisch schlecht leitfähigen Kunststoff besteht.